# EUROPÄISCHE PATENTSCHRIFT

(11) **EP 1 700 660 B1**
(45) Veröffentlichungstag und Bekanntmachung des Hinweises auf die Patenterteilung: **09.05.2007**
(21) Anmeldenummer: 05005246.3
(22) Anmeldetag: 10.03.2005
(51) Int. Cl.: B23D 59/00

(54) **Trenn-/Fräsvorrichtung**
Separating/milling device
Dispositif de séparation/fraisage

(43) Veröffentlichungstag der Anmeldung: 13.09.2006
(73) Patentinhaber: Metabowerke GmbH, 72622 Nürtingen (DE)
(72) Erfinder: Niemann, Bernhard, 49740 Haselünne (DE)
(74) Vertreter: Gesthuysen, von Rohr & Eggert

(56) Entgegenhaltungen:
- DE-C1- 10 215 871
- DE-U1- 20 120 529
- DE-U1- 20 302 813
- US-A- 6 035 757
- US-A1- 2002 131 267
- US-A1- 2003 233 921
- US-A1- 2004 083 869

## Beschreibung

Die Erfindung betrifft eine Trenn-/Fräsvorrichtung mit den Merkmalen des Oberbegriffs von Anspruch 1 sowie eine Trenn-/Fräsvorrichtung mit den Merkmalen des Oberbegriffs von Anspruch 3.

Trenn-/Fräsvorrichtungen sind Vorrichtungen, die zur Materialbearbeitung, insbesondere zum Trennen und/oder Fräsen des zu bearbeitenden Materials, eingesetzt werden. Besondere Anwendungsfelder für eine Trenn-/Fräsvorrichtung sind die Holzbearbeitung, die Kunststoffbearbeitung und die Metallbearbeitung. Eine solche Vorrichtung kann aber auch auf anderen Einsatzgebieten Anwendung finden. Unter einer Trenn-/Fräsvorrichtung sind insbesondere Kappsägen, Bandsägen, Kreissägen, insbesondere Tischkreissägen, Stichsägen, Fräsen und Trennschleifmaschinen zu verstehen.

Eine aus dem Stand der Technik bekannte Kapp- und Gehrungssäge (DE 10 2004 011 491 A1) weist ein motorisch antreibbares Sägeblatt, eine Werkstückauflagefläche und eine Lichtprojektionsvorrichtung auf. Die Lichtprojektionsvorrichtung projiziert einen Lichtstrahl auf ein Werkstück, das zum Sägen auf der Werkstückauflagefläche angeordnet ist. Der Lichtstrahl wird bereits dann auf das Werkstück projiziert, wenn sich das Sägeblatt noch in seiner Ruhestellung befindet, also noch nicht in die Sägestellung geschwenkt wurde. Der Lichtstrahl markiert so die Schnittlage bzw. den Schnittverlauf auf dem Werkstück je nachdem ob der Lichtstrahl im wesentlichen einen Punkt oder eine Linie auf dem Werkstück markiert. Die Lichtprojektionsvorrichtung ist bei dieser Kapp- und Gehrungssäge an der Halterung des Sägeaggregats oder an einem Abschnitt eines Handgriffs angeordnet.

Aus dem Stand der Technik ist es auch bekannt, eine Lichtprojektionsvorrichtung bei einer Kreissäge oder einer Bandsäge vorzusehen (DE 296 16 604 U1). Bei der gezeigten Kreissäge ist die Lichtprojektionsvorrichtung an der das Sägeblatt umgebenden Schutzhaube angeordnet. Die Lichtprojektionsvorrichtung weist eine eigene netzunabhängige Stromversorgungseinheit mit Batterien oder Akkumulatoren auf. Demzufolge weist hier die Projektionsvorrichtung einen eigenen Schalter zum Einschalten auf. Dabei besteht die Gefahr, daß nach einem Sägevorgang das Ausschalten der Lichtprojektionsvorrichtung vergessen wird, so daß die Batterien oder Akkumulatoren unnötig entladen werden.

Lichtprojektionsvorrichtungen der in Rede stehenden Art eignen sich auch für den Einsatz bei von oben auf ein zu bearbeitendes Werkstück aufsetzbaren Trenn-/Fräsvorrichtungen, also Handkreissägen, Stichsägen o. dgl., die in einer Vielzahl von Ausführungsformen seit Jahrzehnten bekannt sind (DE 90 10 716 U1).

Aus dem den Ausgangspunkt der vorliegenden Erfindung bildenden Stand der Technik (US 2004/0083869 A1) ist eine Kapp- und Gehrungssäge bekannt, bei der die Aktivierung der Lichtprojektionsvorrichtung mittels eines Schalters erfolgt, der auf eine Bewegung des Sägeblatts reagiert. Hierzu ist der Schalter mit einem Bewegungssensor ausgestattet.

Von weiteren bekannten Trenn-/Fräsvorrichtungen sind andere Arten von Schaltern bzw. Sensoren zur Erkennung des Maschinenlaufs zur Aktivierung der Lichtprojektionsvorrichtung bekannt (DE 102 15 871 C1, DE 201 20 529 U1, US 2002/0131267 A1).

Der vorliegenden Erfindung liegt das Problem zugrunde, eine Trenn-/Fräsvorrichtung der zuvor genannten Art hinsichtlich der Lichtprojektionsvorrichtung zu optimieren.

Die Erfindung löst das zuvor erläuterte Problem bei einer Trenn-/Fräsvorrichtung mit den Merkmalen des Oberbegriffs von Anspruch 1 durch die Merkmale des kennzeichnenden Teils von Anspruch 1 sowie bei einer Trenn-/Fräsvorrichtung mit den Merkmalen des Oberbegriffs von Anspruch 3 durch die Merkmale des kennzeichnenden Teils von Anspruch 3.

Bevorzugte Ausgestaltungen und Weiterbildungen sind Gegenstand der jeweiligen Unteransprüche.

Die Lösung des Problems wird nach der Erfindung dadurch erreicht, daß die Lichtprojektionsvorrichtung einen Vibrationsschalter aufweist dergestalt, daß die Lichtprojektionsvorrichtung durch manuelles Klopfen auf die Trenn-/Fräsvorrichtung aktivierbar ist. Ein solcher Vibrationsschalter ermöglicht eine einfache und unkomplizierte Aktivierung der Lichtprojektionsvorrichtung, unabhängig vom Maschinenlauf, so daß das Werkstück anhand des Lichtstrahls für die Bearbeitung ausgerichtet werden kann.

In bevorzugter Ausführung ist der Lichtprojektionsvorrichtung ein eigener Schalter zugeordnet, mittels dessen die Betriebszustände "Lichtprojektionsvorrichtung ein" und "Lichtprojektionsvorrichtung aus" schaltbar sind. Im Betriebszustand "Lichtprojektionsvorrichtung ein" ist diese durch eine mechanische Erschütterung aktivierbar, während im Betriebszustand "Lichtprojektionsvorrichtung aus" eine mechanische Erschütterung nicht zu einer Aktivierung der Lichtprojektionsvorrichtung führt. Der zusätzliche Schalter verhindert somit eine ungewollte Betätigung der Lichtprojektionsvorrichtung durch eine mechanische Erschütterung, beispielsweise bei einem Transport der Trenn-/Fräsvorrichtung.

Weiter vorteilhaft ist es, wenn die Lichtprojektionsvorrichtung einen Zeitgeber aufweist, der diese nach einer vorgegebenen Zeitspanne - Abschaltzeitspanne - abschaltet. Damit wird sichergestellt, daß die Lichtprojektionsvorrichtung nach Beendigung der Werkstückbearbeitung nicht unnötig lange in Betrieb bleibt. Insbesondere bei einer Stromversorgung durch Batterien oder Akkumulatoren wird dadurch ein unnötiges Entladen verhindert.

Weitere Einzelheiten, Merkmale, Ziele und Vorteile der vorliegenden Erfindung werden nachfolgend anhand einer Zeichnung bevorzugter Ausführungsbeispiele näher erläutert. In der Zeichnung zeigt
- Fig. 1: eine perspektivische Ansicht eines ersten Ausführungsbeispiels einer Trenn-/Fräsvorrichtung mit einer Lichtprojektionsvorrichtung,
- Fig. 2: eine perspektivische Ansicht eines zweiten Ausführungsbeispiels einer Trenn-/Fräsvorrichtung mit einer Lichtprojektionsvorrichtung,
- Fig. 3: eine perspektivische Ansicht eines dritten Ausführungsbeispiels einer Trenn-/Fräsvorrichtung mit einer Lichtprojektionsvorrichtung,
- Fig. 4: eine Schaltungsanordnung der Lichtprojektionsvorrichtung.

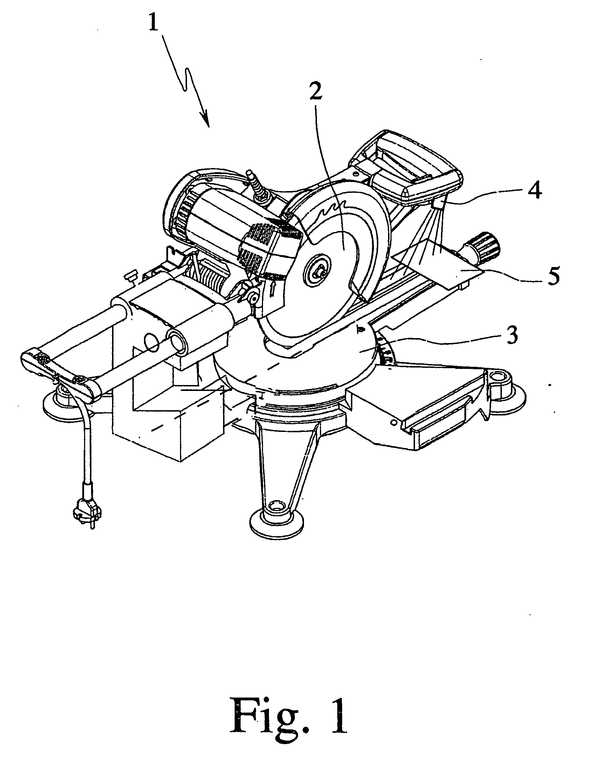

Fig. 1 zeigt eine Trenn-/Fräsvorrichtung 1, die hier als Kapp- und Gehrungssäge dargestellt ist. Die Trenn-/Fräsvorrichtung 1 weist ein motorisch antreibbares Trenn-/Fräselement 2, nämlich ein Sägeblatt, eine Werkstückauflagefläche 3 und eine Lichtprojektionsvorrichtung 4 auf.

Zum Bearbeiten eines Werkstücks 5 wird dieses auf der Werkstücksauflagefläche 3 angeordnet. Um das Werkstück 5 für die Bearbeitung richtig zu positionieren projiziert die Lichtprojektionsvorrichtung 4 einen Lichtstrahl auf das auf der Werkstückauflagefläche 3 angeordnete Werkstück 5. Der Lichtstrahl markiert dabei die Schnitt-/Fräslage bzw. den Schnitt-/Fräsverlauf auf dem Werkstück 5. Die Schnitt-/Fräslage wird markiert, wenn der Lichtstrahl im wesentlichen einen Punkt auf dem Werkstück 5 markiert, der in der Bearbeitungsebene des motorisch antreibbaren Trenn-/Fräselements 2 liegt. Der Schnitt-/Fräsverlauf wird markiert, wenn der Lichtstrahl nicht nur einen Punkt in der Bearbeitungsebene des Trenn-/Fräselements 2 markiert sondern eine Linie auf dem Werkstück 5.

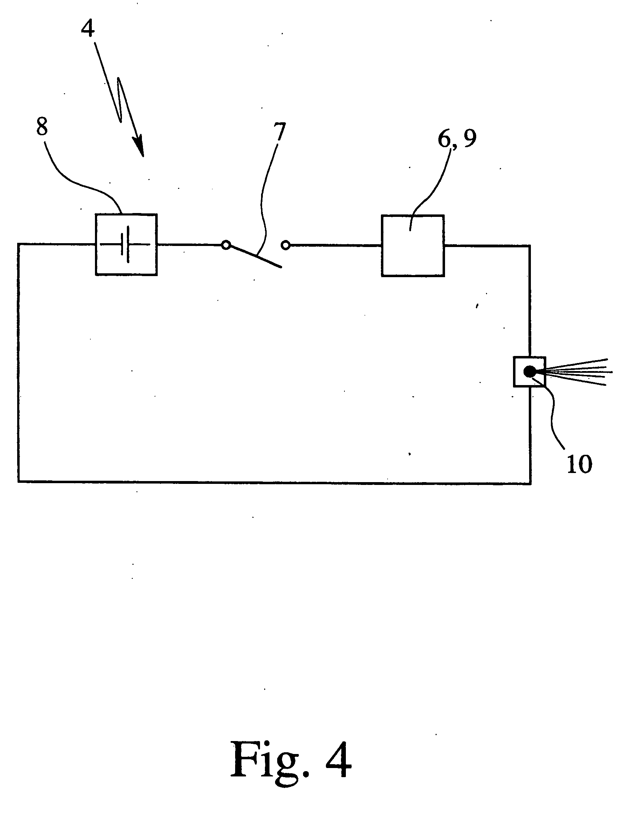

Die Lichtprojektionsvorrichtung 4 weist einen Vibrationsschalter 6 auf (Fig. 4). Aufgrund des Vibrationsschalters 6 ist die Lichtprojektionsvorrichtung 4 durch ein manuelles Klopfen auf die Trenn-/Fräsvorrichtung 1 aktivierbar.

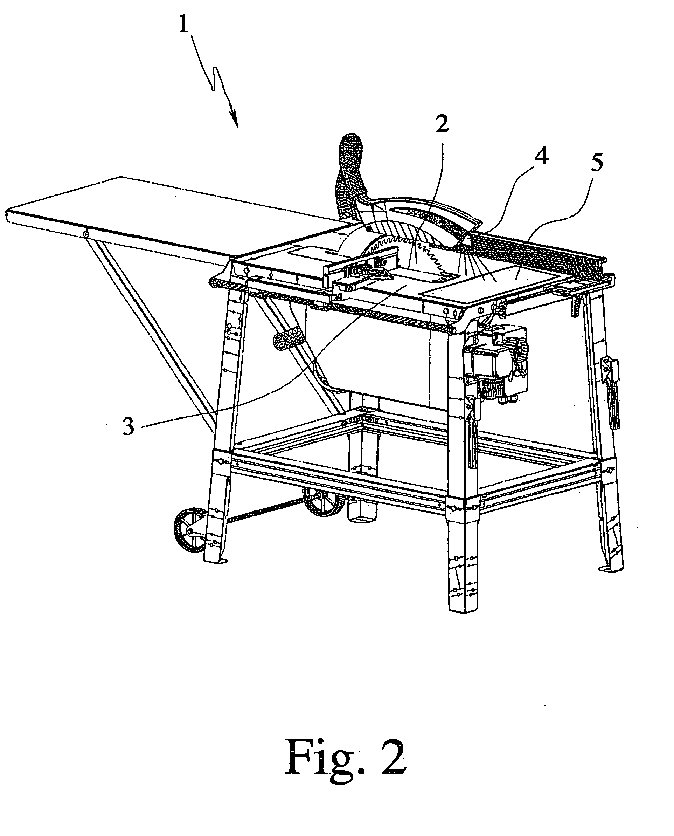

Fig. 2 zeigt eine Trenn-/Fräsvorrichtung 1, die als Tischkreissäge ausgeführt ist. Von Bedeutung ist eine Lichtprojektionsvorrichtung 4 grundsätzlich bei allen Trenn-/Fräsvorrichtungen 1, bei denen die Schnittlage oder der Schnittverlauf vor oder während der Bearbeitung des Werkstücks 5 ohne eine Lichtprojektionsvorrichtung 4 nicht eindeutig zu erkennen ist. Dies sind beispielsweise auch Bandsägen sowie eine Kombination einer Kappsäge mit einer Tischkreissäge, also eine Kapp- und Tischkreissäge bzw. eine Kapp-, Gehrungs- und Tischkreissäge.

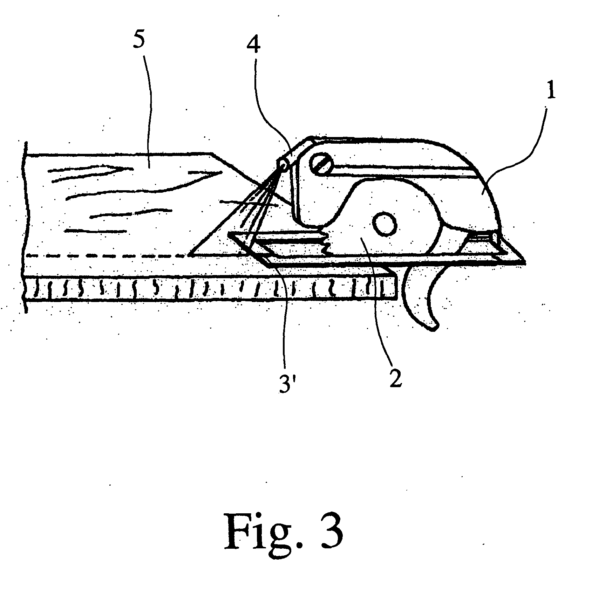

In Fig. 3 ist eine alternative Trenn-/Fräsvorrichtung 1 dargestellt, die sich von der zuvor beschriebenen Trenn-/Fräsvorrichtung 1 dadurch unterscheidet, daß keine Werkstückauflagefläche 3 mit einem darauf angeordneten Werkstück 5 vorgesehen ist, sondern vielmehr eine Führungsfläche 3', mit der die Trenn-/Fräsvorrichtung 1 auf dem Werkstsück 5 aufliegt. Die Führungsfläche 3' verdeckt dabei häufig die Schnitt-/Fräslage, so daß auch bei dieser Unordnung die zuvor beschriebene Lichtprojektionsvorrichtung 4 mit dem zuvor beschriebenen Vibrationsschalter 6 vorteilhaft einsetzbar ist. Eine solche Trenn-/Fräsvorrichtung 1 kann beispielsweise eine Stichsäge, eine Handkreissäge, eine Nutfräse oder eine Trennschleifmaschine sein.

Für eine solche Trenn-/Fräsvorrichtung 1 gelten die gleichen Merkmale und Vorteile entsprechend, wie sie bereits für die Trenn-/Fräsvorrichtung 1 beschrieben wurden bzw. im folgenden weiter beschrieben werden.

Die Lichtprojektionsvorrichtung 4 ist hier (Fig. 1) an die Stromversorgung der Trenn-/Fräsvorrichtung 1 angeschlossen. Dabei kann die Lichtprojektionsvorrichtung 4 unmittelbar mit der Stromversorgung der Trenn-/Fräsvorrichtung 1 gekoppelt sein, d. h. sobald die Trenn-/Fräsvorrichtung 1 an eine Stromversorgung angeschlossen ist, ist auch die Lichtprojektionsvorrichtung 4 mittels des Vibrationsschalters 6 aktivierbar.

Ferner kann vorgesehen sein, daß die Lichtprojektionsvorrichtung 4 mit dem Hauptschalter der Trenn-/Fräsvorrichtung 1 gekoppelt ist. Erst ein Betätigen des Hauptschalters der Trenn-/Fräsvorrichtung 1 ermöglicht eine Aktivierung der Lichtprojektionsvorrichtung 4 durch eine mechanische Erschütterung. Dies ist besonders vorteilhaft bei einer Trenn-/Fräsvorrichtung 1, bei der das motorisch antreibbare Trenn-/Fräselement 2 nicht bereits durch Betätigung des Hauptschalters der Trenn-/Fräsvorrichtung 1 in Betrieb gesetzt wird, sondern dafür eine zusätzliche Betätigung erforderlich ist, beispielsweise das Ziehen eines Hebels an einem Griff, wie das bei einer Kappsäge üblicherweise der Fall ist.

Vorzugsweise (Fig. 4) ist jedoch ein eigener Schalter 7 für die Lichtprojektionsvorrichtung 4 vorgesehen. Die Lichtprojektionsvorrichtung 4 ist mittels des Schalters 7 in die Betriebszustände "Ein" und "Aus" schaltbar. In dem Betriebszustand "Ein" ist die Lichtprojektionsvorrichtung 4 durch eine mechanische Erschütterung aktivierbar, d. h. bei einer mechanischen Erschütterung aktiviert der Vibrationsschalter 6 die Lichtprojektionsvorrichtung 4. Im Betriebszustand "Aus" ist die Lichtprojektionsvorrichtung 4 auch durch eine mechanische Erschütterung nicht aktivierbar.

Fig. 4 zeigt eine Trenn-/Fräsvorrichtung 1, bei der die Lichtprojektionsvorrichtung 4 eine eigene Stromversorgung 8 aufweist. Die eigene Stromversorgung 8 wird üblicherweise durch eine Anordnung von Batterien und/oder Akkumulatoren realisiert. Eine eigene Stromversorgung 8 ist besonders dann vorteilhaft, wenn ein Anschluß an die Stromversorgung der Trenn-/Fräsvorrichtung 1 aufgrund der räumlichen Anordnung schwierig ist. Dies ist besonders bei einer Tischkreissäge der Fall, da die Lichtprojektionsvorrichtung 4 hier vorteilhafterweise am Sägeblattschutz angeordnet ist (Fig. 2).

Auch bei einer Lichtprojektionsvorrichtung 4 mit einer eigenen Stromversorgung 8 ist ein eigener Schalter 7 für die Lichtprojektionsvorrichtung 4, wie er zuvor beschrieben wurde, von Vorteil (Fig. 4). Ein solcher Schalter 7 ermöglicht es nämlich, die Lichtprojektionsvorrichtung 4 in den Betriebszustand "Aus" zu schalten und damit eine Aktivierung der Lichtprojektionsvorrichtung 4 durch eine mechanische Erschütterung, beispielsweise bei einem Transport der Trenn-/Fräsvorrichtung 1, zu verhindern.

Hier und vorzugsweise weist die Lichtprojektionsvorrichtung 4 einen Zeitgeber 9 auf (Fig. 4). Die Lichtprojektionsvomchtung 4 ist mittels des Zeitgebers 9 nach einer vorgegebenen Zeitspanne - Abschaltzeitspanne - abschaltbar. Dies führt dazu, daß die Lichtprojektionsvorrichtung 4 nach Beendigung der Bearbeitung des Werkstücks 5, also nach dem letzten Auftreten einer mechanischen Erschütterung, nur noch eine Zeitspanne, die der Abschaltzeitspanne des Zeitgebers 9 entspricht, weiterbetrieben wird und dann automatisch abschaltet. Damit wird verhindert, daß die Lichtprojektionsvorrichtung 4 aktiviert ist, weil ein Ausschalten vergessen wurde. Dies ist insbesondere bei einer eigenen Stromversorgung 8 der Lichtprojektionsvorrichtung 4 von Bedeutung. Als Abschaltzeitspanne eignet sich besonders eine Zeitspanne zwischen einer Sekunde und zehn Sekunden, ganz besonders eine Zeitspanne von etwa fünf Sekunden. In bevorzugter Ausführung ist die Abschaltzeitspanne des Zeitgebers 9 einstellbar.

Der hier gezeigte Zeitgeber 9 (Fig. 4) ist unmittelbar mit dem Vibrationsschalter 6 gekoppelt. Dies hat den Vorteil, daß die Lichtprojektionsvorrichtung 4 nicht laufend während des Betriebs der Trenn-/Fräsvorrichtung 1 nach Ablauf der Abschaltzeitspanne ausgeschaltet und anschließend durch den Vibrationsschalter 6 wieder eingeschaltet wird, sondern kontinuierlich aktiviert ist und erst nach Beendigung der Bearbeitung des Werkstücks 5 ausgeschaltet wird.

Bei den gezeigten Ausführungsbeispielen der Trenn-/Fräsvorrichtung 1 (Fig. 1 bis 4) weist die Lichtprojektionsvorrichtung 4 als Lichtquelle 10 einen Positionierlaser auf. Unter dem Begriff "Positionierlaser" ist dabei jeder Laser zu verstehen, der dazu geeignet ist, an einem Teil der Trenn-/Fräsvorrichtung 1 angeordnet zu sein und dabei die Schnitt-/Fräslage oder den Schnitt-/Fräsverlauf auf dem Werkstück 5 zu markieren.

Die Lichtquelle 10 der Lichtprojektionsvorrichtung 4 kann dabei an jeder beliebigen Stelle der Trenn-/Fräsvorrichtung 1 angeordnet sein. Es ist allerdings darauf zu achten, daß die Lichtquelle 10 so angeordnet ist, daß die Markierung auf dem Werkstück 5 vor Bearbeitung des Werkstücks 5 zu sehen ist und vorzugsweise auch während der Bearbeitung des Werkstücks 5. Ferner ist es von Vorteil, wenn die Lichtquelle 10 so angeordnet ist, daß der von der Lichtquelle 10 ausgehende Lichtstrahl in seinem gesamten Verlauf in einer Ebene mit dem Trenn-/Fräselement 2 liegt. Bei einer solchen Anordnung ist die genaue Markierung auf dem Werkstück 5 nämlich von der Höhe des Werkstücks 5 bzw. einer evtl. Schwenkbewegung der Lichtprojektionsvorrichtung 4 und damit einer Höhenänderung unabhängig.

Bei einer Kappsäge als Trenn-/Fräsvorrichtung 1 eignet sich auch ein Flanschlaser als Lichtquelle 10. Ein Flanschlaser ist ein Laser, der an dem Flansch des Trenn-/Fräselements 2, also an dem Flansch des Sägeblatts angebracht ist. Der Flanschlaser ist demzufolge nicht in einer Ebene mit dem Trenn-/Fräselement 2 angeordnet, was dazu führt, daß der Lichtstrahl nicht senkrecht sondern schräg auf das Werkstück 5 auftrifft. Demzufolge ist die genaue Markierung auf dem Werkstück 5 höhenabhängig, es findet also beim Schwenken des Sägeaggregats mit dem Sägeblatt und dem Flanschlaser eine Höhenänderung und aufgrund dieser eine Verschiebung der Markierung auf dem Werkstück 5 statt. Diese kann jedoch in so engen Grenzen gehalten werden, daß sie für die Bearbeitung von Werkstücken 5 noch akzeptabel ist.

Bei einer Trenn-/Fräsvorrichtung 1, die eine Kapp- und Tischkreissäge bzw. eine Kapp-, Gehrungs- und Tischkreissäge ist, ist es besonders vorteilhaft, wenn die Lichtprojektionsvorrichtung 4 so angeordnet ist, daß sie sowohl in der Kapp- bzw. Gehrungsfunktion die Schnittlage bzw. den Schnittverlauf auf dem Werkstück 5 markiert als auch in der Tischkreissägefunktion.

Alternativ kann bei einer solchen Trenn-/Fräsvorrichtung 1 auch vorgesehen sein, daß diese zwei Lichtprojektionsvorrichtungen 4 aufweist oder daß eine Lichtprojektionsvorrichtung 4 zwei Lichtquellen 10 aufweist. Dabei ist von besonderem Vorteil, wenn funktionsabhängig nur eine der beiden Lichtprojektionsvorrichtungen 4 bzw. der beiden Lichtquellen 10 aktivierbar geschaltet ist. Dies kann beispielsweise automatisch bei der Drehung der Sägeeinheit von der Kappfunktion in die Tischkreissägefunktion bzw. umgekehrt erfolgen. Denkbar ist, daß bei der Drehung der Sägeeinheit entsprechende Schalter betätigt werden.

## Patentansprüche

1. Trenn-/Fräsvorrichtung mit einem motorisch antreibbaren Trenn-/Fräselement (2), einer Werkstückauflagefläche (3) und einer Lichtprojektionsvorrichtung (4),
wobei die Lichtprojektionsvorrichtung (4) einen Lichtstrahl auf ein auf der Werkstückauflagefläche (3) angeordnetes Werkstück (5) derart projiziert, daß der Lichtstrahl die Schnitt-/Fräslage und/oder den Schnitt-/Fräsverlauf auf dem Werkstück (5) markiert und
wobei die Lichtprojektionsvorrichtung (4) einen Schalter (6) zur Aktivierung der Lichtprojektionsvorrichtung (4) aufweist,
**dadurch gekennzeichnet,**
**daß** der Schalter (6) als Vibrationsschalter ausgeführt ist dergestalt, daß die Lichtprojektionsvorrichtung (4) durch ein manuelles Klopfen auf die Trenn-/Fräsvorrichtung aktivierbar ist.

2. Trenn-/Fräsvorrichtung nach Anspruch 1, **dadurch gekennzeichnet,**
**daß** die Trenn-/Fräsvorrichtung (1) eine Kappsäge, insbesondere eine Kapp- und Gehrungssäge, eine Bandsäge oder eine Tischkreissäge ist.

3. Trenn-/Fräsvorrichtung mit einem motorisch antreibbaren Trenn-/Fräselement (2), einer Führungsfläche (3') und einer Lichtprojektionsvorrichtung (4),
wobei die Lichtprojektionsvorrichtung (4) einen Lichtstrahl auf ein unterhalb der Führungsfläche (3') angeordnetes Werkstück (5) derart projiziert, daß der Lichtstrahl die Schnitt-/Fräslage und/oder den Schnitt-/Fräsverlauf auf dem Werkstück (5) markiert, und
wobei die Lichtprojektionsvorrichtung (4) einen Vibrationsschalter (6) zur Aktivierung der Lichtprojektionsvorrichtung (4) aufweist,
**dadurch gekennzeichnet,**
**daß** der Vibrationsschalter (6) dergestalt ist, daß die Lichtprojektionsvorrichtung (4) durch ein manuelles Klopfen auf die Trenn-/Fräsvorrichtung aktivierbar ist.

4. Trenn-/Fräsvorrichtung nach Anspruch 3, **dadurch gekennzeichnet,**
**daß** die Trenn-/Fräsvorrichtung (1) eine Stichsäge, eine Handkreissäge, eine Nutfräse oder eine Trennschleifmaschine ist.

5. Trenn-/Fräsvorrichtung nach einem der voranstehenden Ansprüche, **dadurch gekennzeichnet,**
**daß** die Lichtprojektionsvorrichtung (4) an die Stromversorgung der Trenn-/Fräsvorrichtung (1) angeschlossen ist.

6. Trenn-/Fräsvorrichtung nach einem der voranstehenden Ansprüche, **dadurch gekennzeichnet,**
**daß** ein eigener Schalter (7) für die Lichtprojektionsvorrichtung (4) vorgesehen ist, daß die Lichtprojektionsvorrichtung (4) mittels des Schalters (7) in die Betriebszustände "Ein" und "Aus" schaltbar ist und daß die Lichtprojektionsvorrichtung (4) im Betriebszustand "Ein" durch manuelles Klopfen aktivierbar ist und im Betriebszustand "Aus" durch manuelles Klopfen nicht aktivierbar ist.

7. Trenn-/Fräsvorrichtung nach einem der voranstehenden Ansprüche, **dadurch gekennzeichnet,**
**daß** die Lichtprojektionsvorrichtung (4) eine eigene Stromversorgung (8), insbesondere mit Batterien und/oder Akkumulatoren aufweist.

8. Trenn-/Fräsvorrichtung nach einem der voranstehenden Ansprüche, **dadurch gekennzeichnet,**
**daß** die Lichtprojektionsvorrichtung (4) einen Zeitgeber (9) aufweist und daß die Lichtprojektionsvorrichtung (4) mittels des Zeitgebers (9) nach einer vorgegebenen Zeitspanne - Abschaltzeitspanne - abschaltbar ist,
vorzugsweise, daß die Abschaltzeitspanne des Zeitgebers (9) einstellbar ist.

9. Trenn-/Fräsvorrichtung nach einem der voranstehenden Ansprüche, **dadurch gekennzeichnet,**
**daß** die Lichtprojektionsvorrichtung (4) als Lichtquelle (10) einen Positionierlaser aufweist.

10. Trenn-/Fräsvorrichtung nach einem der voranstehenden Ansprüche, **dadurch gekennzeichnet,**
**daß** die Lichtprojektionsvorrichtung (4) als Lichtquelle (10) einen Flanschlaser aufweist.

11. Trenn-/Fräsvorrichtung nach einem der voranstehenden Ansprüche, **dadurch gekennzeichnet,**
**daß** die Trenn-/Fräsvorrichtung (1) eine Kapp- und Tischkreissäge ist und zwei Lichtprojektionsvorrichtungen (4) oder eine Lichtprojektionsvorrichtung (4) mit zwei Lichtquellen (10) aufweist, wobei
automatisch funktionsabhängig nur eine der beiden Lichtprojektionsvorrichtungen (4) oder Lichtquellen (10) aktivierbar geschaltet ist.

## Claims

1. Separating/milling device comprising a motor-operated separating/milling element (2), a work-supporting surface (3) and a light-projecting device (4), the light-projecting device (4) projecting a light beam onto a workpiece (5) arranged on the work-supporting surface (3) in such a way that the light beam marks the cutting/milling position and/or the cutting/milling course on the workpiece (5), and the light-projecting device (4) having a switch (6) for activating the light-projecting device (4), **characterized in that** the switch (6) is designed as a vibration switch in such a way that the light-projecting device (4) can be activated by manual knocking on the separating/milling device.

2. Separating/milling device according to Claim 1, **characterized in that** the separating/milling device (1) is a crosscut saw, in particular a crosscut and mitre saw, a band saw or a circular bench saw.

3. Separating/milling device comprising a motor-operated separating/milling element (2), a guide surface (3') and a light-projecting device (4), the light-projecting device (4) projecting a light beam onto a workpiece (5) arranged below the guide surface (3') in such a way that the light beam marks the cutting/milling position and/or the cutting/milling course on the workpiece (5), and the light-projecting device (4) having a vibration switch (6) for activating the light-projecting device (4), **characterized in that** the vibration switch (6) is designed in such a way that the light-projecting device (4) can be activated by manual knocking on the separating/milling device.

4. Separating/milling device according to Claim 3, **characterized in that** the separating/milling device (1) is a jigsaw, a portable circular saw, a biscuit jointer or an abrasive cutting-off machine.

5. Separating/milling device according to one of the preceding claims, **characterized in that** the light-projecting device (4) is connected to the power supply of the separating/milling device (1).

6. Separating/milling device according to one of the preceding claims, **characterized in that** a separate switch (7) is provided for the light-projecting device (4), **in that** the light-projecting device (4) can be switched into the "on" and "off" operating states by means of the switch (7), and **in that** the light-projecting device (4) can be activated in the "on" operating state by manual knocking and cannot be activated in the "off" operating state by manual knocking.

7. Separating/milling device according to one of the preceding claims, **characterized in that** the light-projecting device (4) has a separate power supply (8), in particular with batteries and/or accumulators.

8. Separating/milling device according to one of the preceding claims, **characterized in that** the light-projecting device (4) has a timer (9), and **in that** the light-projecting device (4) can be switched off after a predetermined time interval - switch-off time interval - by means of the timer (9), preferably **in that** the switch-off time interval (9) can be set.

9. Separating/milling device according to one of the preceding claims, **characterized in that** the light-projecting device (9) has a positioning laser as light source (10).

10. Separating/milling device according to one of the preceding claims, **characterized in that** the light-projecting device (4) has a flange laser as light source (10).

11. Separating/milling device according to one of the preceding claims, **characterized in that** the separating/milling device (1) is a crosscut and circular bench saw and has two light-projecting devices (4) or one light-projecting device (4) having two light sources (10), only one of the two light-projecting devices (4) or light sources (10) being switched such that it can be activated automatically in relation to the function.

## Revendications

1. Dispositif de tronçonnage/fraisage comprenant un élément de tronçonnage/fraisage (2) pouvant être entraîné par un moteur, une surface d'appui de pièce (3) et un dispositif de projection de lumière (4), le dispositif de projection de lumière (4) projetant un rayon de lumière sur une pièce (5) disposée sur la surface d'appui de pièce (3) de telle sorte que le rayon de lumière marque la position de la coupe/du fraisage et/ou le tracé de la coupe/du fraisage sur la pièce (5) et le dispositif de projection de lumière (4) présentant un commutateur (6) pour activer le dispositif de projection de lumière (4), **caractérisé en ce que** le commutateur (6) est configuré sous la forme d'un commutateur à vibrations de telle sorte que le dispositif de projection de lumière (4) puisse être activé en frappant de la main sur le dispositif de tronçonnage/fraisage.

2. Dispositif de tronçonnage/fraisage selon la revendication 1, **caractérisé en ce que** le dispositif de tronçonnage/fraisage (1) est une scie à tronçonner, notamment une scie à tronçonner et à onglets, une scie à ruban ou une scie circulaire de table.

3. Dispositif de tronçonnage/fraisage comprenant un élément de tronçonnage/fraisage (2) pouvant être entraîné par un moteur, une surface de guidage (3') et un dispositif de projection de lumière (4), le dispositif de projection de lumière (4) projetant un rayon de lumière sur une pièce (5) disposée sous la surface de guidage (3') de telle sorte que le rayon de lumière marque la position de la coupe/du fraisage et/ou le tracé de la coupe/du fraisage sur la pièce (5) et le dispositif de projection de lumière (4) présentant un commutateur à vibrations (6) pour activer le dispositif de projection de lumière (4), **caractérisé en ce que** le commutateur à vibrations (6) est configuré de telle sorte que le dispositif de projection de lumière (4) puisse être activé en frappant de la main sur le dispositif de tronçonnage/fraisage.

4. Dispositif de tronçonnage/fraisage selon la revendication 3, **caractérisé en ce que** le dispositif de tronçonnage/fraisage (1) est une scie sauteuse, une scie circulaire manuelle, une rainureuse ou une tronçonneuse à disque.

5. Dispositif de tronçonnage/fraisage selon l'une des revendications précédentes, **caractérisé en ce que** le dispositif de projection de lumière (4) est raccordé à l'alimentation électrique du dispositif de tronçonnage/fraisage (1).

6. Dispositif de tronçonnage/fraisage selon l'une des revendications précédentes, **caractérisé en ce qu'**il est prévu un commutateur (7) propre pour le dispositif de projection de lumière (4), **en ce que** le dispositif de projection de lumière (4) peut être commuté dans les états opérationnels « Marche » et « Arrêt » au moyen du commutateur (7) et **en ce que** le dispositif de projection de lumière (4), dans l'état opérationnel « Marche », peut être activé par une frappe de la main et, dans l'état opérationnel « Arrêt », ne peut pas être activé par une frappe de la main.

7. Dispositif de tronçonnage/fraisage selon l'une des revendications précédentes, **caractérisé en ce que** le dispositif de projection de lumière (4) présente une alimentation électrique propre (8), notamment avec des piles et/ou des accumulateurs.

8. Dispositif de tronçonnage/fraisage selon l'une des revendications précédentes, **caractérisé en ce que** le dispositif de projection de lumière (4) présente une minuterie (9) et **en ce que** le dispositif de projection de lumière (4) peut être désactivé après un intervalle de temps donné - l'intervalle de temps de désactivation au moyen de la minuterie (9), de préférence **en ce que** l'intervalle de temps de désactivation de la minuterie (9) est réglable.

9. Dispositif de tronçonnage/fraisage selon l'une des revendications précédentes, **caractérisé en ce que** le dispositif de projection de lumière (4) présente comme source de lumière (10) un laser de positionnement.

10. Dispositif de tronçonnage/fraisage selon l'une des revendications précédentes, **caractérisé en ce que** le dispositif de projection de lumière (4) présente comme source de lumière (10) un laser à collerette.

11. Dispositif de tronçonnage/fraisage selon l'une des revendications précédentes, **caractérisé en ce que** le dispositif de tronçonnage/fraisage (1) est une scie à tronçonner et présente deux dispositifs de projection de lumière (4) ou un dispositif de projection de lumière (4) muni de deux sources de lumière (10), un seul des deux dispositifs de projection de lumière (4) ou une seule des deux sources de lumière (10) étant rendue activable automatiquement suivant la fonction.
